# EUROPEAN PATENT SPECIFICATION

(11) **EP 0 591 145 B1**
(45) Date of publication and mention of the grant of the patent: **06.08.1997**
(21) Application number: 90915785.1
(22) Date of filing: 25.10.1990
(51) Int. Cl.: B25H 1/00, B27C 5/10, B23Q 5/54

(54) **A ROUTER JIG**
FRÄSENFÜHRER
GABARIT DE COUTEAU

(30) Priority: 25.10.1989 GB 8924028
(43) Date of publication of application: 13.04.1994
(73) Proprietor: Titman Tip Tools Ltd, Clacton-on-Sea, Essex CO15 4AB (GB)
(72) Inventor: IRVING, Brian, George, Thame Oxon OX9 3DQ (GB); HOLMES, Stanley, Joseph, Great Kimble Aylesbury, Bucks HP19 3TU (GB)
(74) Representative: Allsop, John Rowland
(86) International application number: GB9001639
(87) International publication number: WO9106402

(56) References cited:
- EP-A- 0 126 853
- CH-A- 619 636
- DE-A- 2 045 387
- DE-A- 2 546 907
- DE-A- 3 205 202
- DE-A- 3 741 439
- DE-C- 843 011
- FR-A- 350 923
- FR-A- 2 318 011
- US-A- 2 094 936
- US-A- 3 447 454
- US-A- 4 585 376

## Description

### FIELD OF THE INVENTION

The present invention relates to routers and particularly to a jig for operating a router as defined in the pre-characterising portion of claim 1. A jig of this type is, for example, known from DE-A-3 741 439.

### BACKGROUND OF THE INVENTION

Standard routers normally take the form of a router head mounted on a specially constructed base plate by means of two spaced pillars. The router head is reciprocally removable on the pillars for adjustment of the distance between the head and the base plate thereby to set the depth of cut as between the router tool mounted to the head and projecting through an aperture in the base plate, and a workpiece positioned beneath the base plate.

The base plate is provided with parallel guide tracks for the insertion of guide rods and along which the base plate is movable with respect to a guide fence for the workpiece. The movement of the base plate along the guide rods is transverse to the direction of movement of the router head on the support pillars.

The router head is conventionally provided with hand grips which are attached to arms which extend in-line to either side respectively of the router head.

A router stand is already in use to which is mounted a router machine of a special design which is operated by means of a foot actuated pedal beneath the work bench of the stand, to the extent that actuation of the foot pedal causes a rise and fall movement of the router head by means of a rack and pinion coupling.

The coupling is fixed in the sense that the rack and pinion movement serves to reciprocate the router head with respect to the workpiece along a vertical axis and is therefore only suitable for fixed head routing.

Moreover the system is restricted by design and cost essentially to use in the general machine shop and does not have those attributes which are necessary for general acceptance by the DIY operator particularly from the cost point of view.

For other representative prior art the reader is directed to German patents DE-A-3 741 439 and DE-C-843 011.

The former disclosure in particular relates to an independently mountable jig for a routing machine which is able to reciprocate the router to effect a working operation.

The prior devices disclosed in these two documents suffer from prior art disadvantages as expressed above.

### SUMMARY OF THE INVENTION

It is an object of the present invention accordingly to provide a jig for a routing machine of standard usage, the jig being designed so that it may be easily attached to the standard machine to permit the routing head to be reciprocated in the jig by means, preferably, of a bowden cable drive actuated by a foot pedal.

By this means both hands of an operator are left free to handle the workpiece in contrast to the prior art usage. As far as an improvement over the rack and pinion drive arrangement described above is concerned, the use of an independently mountable jig means that the jig can be adapted for rotatable and pivotal mounting so permitting the angle of attack of the tool of the routing head to be varied as the need arises without changing the tool itself. This has important applications as will be appreciated by the person skilled in the art.

According to the present invention there is provided a jig for a routing machine having a router head reciprocally movable by means of side arms thereof along its axis on spaced guide pillars with respect to a base plate therefor, the jig comprising a support cradle for the routing machine, and characterised by router head attachment means for connection to the side arms of the router head, the attachment means being pivotally mounted on the support cradle, yieldable means for holding said attachment means at a starting pivotal position corresponding to a displaced position of the router head from said base plate, and foot actuated drive means for actuating said attachment means whereby to move the router head from said displaced position to selected positions intermediate said displaced position and said base plate.

The attachment means preferably takes the form of a pair of parallel arms respectively pivotally mountable to the existing arms of a standard router head extending to either side thereof.

The drive means is preferably in the form of a bowden cable, the inner cable of which is attachable to the base plate and the outer sheath to the pivotally mounted attachment means whereby actuation of the bowden cable as by foot pedal operation varies the distance between the router head and the base plate as desired.

Other features and advantages of the present invention will become apparent from the disclosure which follows in relation to preferred embodiments of the invention.

### BRIEF DESCRIPTION OF THE DRAWINGS

A preferred embodiment of the present invention will now be described by way of example with reference to the accompanying drawings wherein;
Fig 1 is a perspective view in outline of a standard router machine with support base plate; and
Fig 2 is a perspective view of a jig for mounting the router shown in Fig 1 to a work bench.

### BEST MODES OF CARRYING OUT THE INVENTION

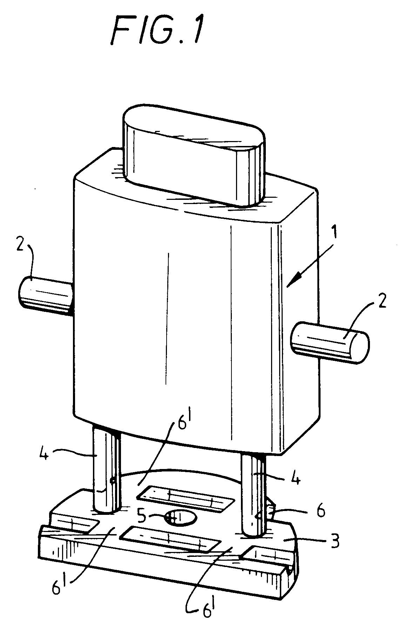

The standard router shown in Fig 1 comprises a router head 1 having in line transversely extending arms 2 to which are attached hand grips (not shown) for manipulating the router head 1 as required.

The router head 1 is mounted for reciprocal movement with respect to a specially constructed base plate 3 on two pillars 4.

A router tool (not shown) attached to the router head 1 extends through an aperture 5 in the base plate 3 to engage a workpiece positioned beneath the plate 3 and against a guide fence (not shown), as is well known in the art.

The surface of the base plate 3 is provided with two parallel guide tracks 6 through which guide rods of a micro adjustable guide fence are inserted to enable the router head to be moved transverse to its reciprocating axis to bring the router tool into engagement with the workpiece held against the guide fence.

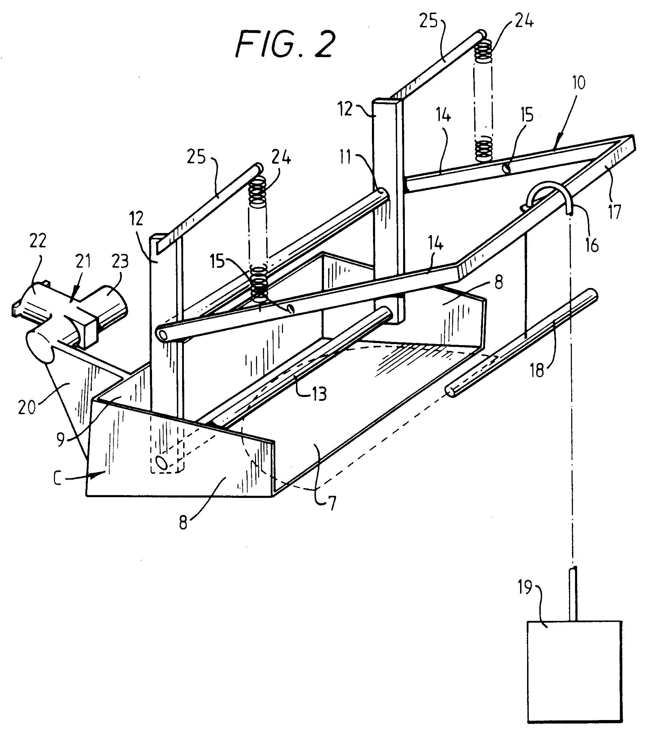

The jig shown in Fig 2 is designed to be attached to the router shown in Fig 1, and comprises a flat support plate 7 for securing to the base of the base plate 3 of the router and then to a work bench.

The support plate 7 is bounded by two side walls 8 and joined by a rear wall 9, to form a support cradle C. A pivotal support structure for attachment to the router head comprises a rectangular frame 10 pivotally mounted at 11 to spaced uprights 12. The spaced uprights 12 are pivotally mounted respectively to the ends of a bar 13 which fits in assembly between the side walls 8.

The parallel sides 14 of the frame 10 are each provided with centrally positioned holes 15.

The outer sheath of the bowden cable 16 is secured to the side 17 of the frame 10 and the inner cable of the bowden cable to a tubular bar 18. The bowden cable is actuated by means of a pedal drive shown schematically at 19.

A flange 20 attached to the rear wall 9 supports a block 21 comprising transversely arranged tubular grips 22 and 23.

This permits the cradle provided by the support plate 7 and side walls 8 and 9, to be attached to tubular supports of the work bench via tubular grips 22 and 23 thereby to provide for rotational movements of the cradle C and the routing machine mounted therewithin, as will be described.

To mount the router as shown in Fig 1 in the jig as above described with reference to Fig 2, the bars 13 and 28 are first positioned in the channels 6 and retained therein by the channel bridges 6'.

The parallel arms 14 of the frame 10 are then respectively attached to the arms 2 extending from the router head by means of suitable screw attachments inserted through the holes 15 in the arms 14.

The base plate 3 with the router 1 and the attached pivotal mechanism is then mounted bodily in the cradle C and the base plate 3 then secured to the support plate 7 of the cradle.

To maintain the router at a maximum displaced position from the base plate, the frame 10 is held at a maximum upper pivotal position by means of springs 24 held between projecting arms 25 attached to the ends of the uprights 12 as shown.

The disposition of the various connecting members of the pivotal structure attached to the router head is such that as the bowden cable is actuated, the router head executes a vertical reciprocal movement thereby to permit the tool of the router to engage the workpiece by foot pedal action, within the parameters of a pre-set working depth.

Summarising the above preferred embodiment in a broad sense, the invention provides a jig for a routing machine having a router head which is reciprocally movable along its axis on spaced guide pillars with respect to the base plate of the machine in order to guide a tool of the router with respect to a workpiece, the jig comprising a pivotally mounted support for attachment between the router head and the base plate, means for urging the support means to maintain the router head at a displaced position from the base plate, and drive means for moving the head from the displaced position to selected positions intermediate the displaced position and the base plate.

## Claims

1. A jig for a routing machine having a router head (1) reciprocally movable by means of side aims (2) thereof along its axis on spaced guide pillars (4) with respect to a base plate (3) therefor, the jig comprising a support cradle (C) for the routing machine, and characterised by router head attachment means (12, 14, 15) for connection to the side arms (2) of the router head (1), the attachment means (12, 14, 15) being pivotally mounted on the support cradle (C), yieldable means (24, 25) for holding said attachment means (12, 14, 15) at a starting pivotal position corresponding to a displaced position of the router head (1) from said base plate (3), and foot actuated drive means (16, 19) for actuating said attachment means whereby to move the router head (1) from said displaced position to selected positions intermediate said displaced position and said base plate (3).

2. A jig as claimed in claim 1 wherein said attachment means (12, 14, 15) includes a pair of parallel arms (14, 15) for respective attachment to the side arms (2) of the router head (1), the parallel arms (14, 15) being pivotally mounted to a pair of spaced uprights (12) which themselves are pivotally mounted to the support cradle (C).

3. A jig as claimed in claim 2 wherein said support cradle (C) is provided with a transverse bar (13) for engaging one guide track of a pair of guide tracks (6) provided in the base plate (3) of the routing machine, said spaced uprights (12) being pivotally mounted on said transverse bar (13).

4. A jig as claimed in claim 3 wherein said drive means is in the form of a foot operated bowden cable (16), the inner cable of which is attached to a further bar (18) for engaging the other guide track of said base plate (3), and the outer sheath to a connecting member (17) joining the said two parallel arms (14, 15).

5. A jig as claimed in claim 1 wherein said yieldable means (24, 25) is in the form of a spring or springs (24) arranged between said spaced uprights (12) and said parallel aims (14, 15) which are themselves pivotally mounted to said uprights (12).

6. A jig as claimed in any preceding claim wherein a pair of tubular grips (22, 23) for mounting to tubular supports of a work bench are attached to the cradle (C), the axes of said grips (22, 23) being transverse to one another thereby to provide for rotational movements of the cradle (C) in differing rotational planes.

## Patentansprüche

1. Eine Führung für eine Fräsmaschine mit einem Fräsmaschinenkopf (1), der unter Verwendung von an ihm vorgesehenen Seitenarmen (2) entlang seiner Achse an voneinander beabstandeten Führungsstangen (4) relativ zu einer Grundplatte (3) bewegbar ist, wobei die Führung ein Traggestell (C) für die Fräsmaschine aufweist, **gekennzeichnet** durch Fräsmaschinenkopf-Befestigungs- oder -anschlußmittel (12, 14, 15) zum Verbinden mit den Seitenarmen (2) des Fräsmaschinenkopfes (1), wobei die Befestigungsmittel (12, 14, 15) gelenkig am Traggestell (C) befestigt sind, durch Federmittel (24, 25), um die Anschlußmittel (12, 14, 15) in einer Ausgangsschwenkstellung zu halten, die einer beabstandeten Position des Fräsmaschinenkopfes (1) von der Grundplatte entspricht, sowie durch Fußbetätigungsmittel (16, 19) zum Betätigen der Anschlußmittel, um den Fräsmaschinenkopf (1) von seiner beabstandeten Position in ausgewählte Positionen, zwischen der beabstandeten Position und der erwähnten Grundplatte (3) zu bewegen

2. Führung nach Anspruch 1, dadurch gekennzeichnet, daß die Anschlußmittel (12, 14, 15) ein Paar von parallelen Armen (14, 15) aufweisen, und zwar für die jeweilige Verbindung mit den Seitenarmen (2) des Fräsmaschinenkopfes (1), wobei die parallelen Arme (14, 15) schwenkbar an zwei voneinander beabstandeten Hebel oder Ständern (12) befestigt sind, die ihrerseits schwenkbar mit dem Traggestell (C) verbunden sind.

3. Führung nach Anspruch 2, dadurch gekennzeichnet, daß das Traggestell (C) einen Querstab (13) aufweist, und zwar für den Eingriff in eine Führung eines Paar von Führungen (6), die in der Grundplatte der Fräsmaschine vorgesehen sind, wobei die voneinander beabstandeten Hebel (12) an diesem Querstab (13) schwenkbar vorgesehen sind.

4. Führung nach Anspruch 3, dadurch gekennzeichnet, daß die erwähnten Betätigungsmittel als fußbetätigter Bowdenzuges (16) ausgebildet sind, dessen inneres Seil an einem weiteren Stab oder Balken (18) befestigt ist, der für den Eingriff in eine weitere Führung der Grundplatte (3) vorgesehen ist, und daß die äußere Hülle mit einem Verbindungselement (17) verbunden ist, welches die beiden parallelen Arme (14, 15) verbindet.

5. Führung nach Anspruch 1, dadurch gekennzeichnet, daß die Federmittel (24, 25) von einer Feder oder mehreren Federn (24) gebildet sind, die zwischen den erwähnten, voneinander beabstandeten Hebeln (12) und den parallelen Armen (14, 15) angeordnet sind, die ihrerseits an den Hebeln (12) schwenkbar vorgesehen sind.

6. Führung nach einem der vorhergehenden Ansprüche, dadurch gekennzeichnet, daß ein Paar von rohrförmigen Einspann- oder Halteelementen (22, 23) zur Befestigung an rohrförmigen Halterungen einer Werkbank am Traggestell (C) vorgesehen sind, wobei die Achsen der Einspann- oder Halteelemente (22, 23) senkrecht zueinander liegen, um Drehbewegungen des Traggestells in unterschiedlichen Rotationsebenen zu ermöglichen.

## Revendications

1. Un gabarit pour une machine à couper présentant une tête de coupe (1) mobile en va-et-vient par l'intermédiaire de ses bras latéraux (2) la long de son axe sur des colonnes de guidage espacées (4) par rapport à une plaque de base (3) pour celle-ci, le gabarit comprenant un berceau de support (C) pour la machine de coupe, et caractérisé par des moyens de fixation (12, 14, 15) de la tête de coupe en vue d'une liaison aux bras latéraux (2) de la tête de coupe (1), les moyens de fixation (12, 14, 15) étant montés de monière pivotante sur le berceau de support (C), des moyens élastiques (24, 25) pour maintenir lesdits moyens de fixation (12, 14, 15) à une position de pivotement de départ correspondant à une position de la tête de coupe (1) déplacée de ladite plaque de base (3), et des moyens d'entraînement (16, 19) actionnés par le pied permettant de commander lesdits moyens de fixation de manière à déplacer la tête de coupe (1) de ladite position déplacée à des positions choisies intermédiaires entre ladite position déplacée et ladite plaque de base (3).

2. Un gabarit tel que revendiqué à la revendication 1, dans lequel lesdits moyens de fixation (12, 14, 14) comprennent une paire de bras parallèles (14, 15) pour une fixation respective aux bras latéraux (2) de la tête de coupe (1), les bras parallèles (14, 15) étant montés de manière pivotante sur une paire de montants écartés (12) qui eux-mômes sont montés de manière pivotante sur la berceau de support (C).

3. Un gabarit tel que revendiqué à la revendication 2, dans lequel ledit berceau de support (C) est muni d'une barre transversale (13) pour engager une piste de guidage d'une paire de pistes de guidage (6) prévues dans la plaque de base (3) de la machine de coupe, lesdits montants écartés (12) étant montés de manière pivotante sur ladite barre transversale (13).

4. Un gabarit tel que revendiqué à la revendication 3, dans lequel lesdits moyens d'entraînement présentent la forme d'un câble Bowden (16) actionné par le pied, dont le câble interne est fixé à une barre supplémentaire (18) pour engager l'autre piste de guidage de ladite plaque de base (3), et le fourreau externe est fixé à un élément de liaison (17) reliant lesdits deux bras parallèles (14, 15).

5. Un gabarit tel que revendiqué à la revendication 1, dans lequel lesdits moyens élastiques (24, 25) présentent la forme d'un ressort ou de ressorts (24) prévus entre lesdits montants écartés (12) et lesdits bras parallèles (14, 15) qui sont eux-mêmes montés de manière pivotante sur lesdits montants (12).

6. Un gabarit tel que revendiqué à une quelconque revendication précédente dans lequel une paire de poignées tubulaires (22, 23) pour un montage sur des supports tubulaires d'un banc de travail est fixée au berceau (C), les axes desdites poignées (22, 23) étant perpendiculaires l'un à l'autre de manière à permettre des mouvements de rotation du berceau (C) dans différents plans de rotation.
